# EUROPÄISCHE PATENTSCHRIFT

(11) **EP 0 160 993 B1**
(45) Veröffentlichungstag und Bekanntmachung des Hinweises auf die Patenterteilung: **14.12.1994**
(21) Anmeldenummer: 85105680.4
(22) Anmeldetag: 09.05.1985
(51) Int. Cl.: H04Q 7/04, H04B 7/005

(54) **Funksystem**
Radio-system
Système radio

(30) Priorität: 10.05.1984 DE 3417233
(43) Veröffentlichungstag der Anmeldung: 13.11.1985
(73) Patentinhaber: Alcatel SEL Aktiengesellschaft, D-70435 Stuttgart (DE)
(72) Erfinder: Langewellpott, Ulrich, Dr., D-7300 Esslingen (DE)
(74) Vertreter: Graf, Georg Hugo, Dipl.-Ing.

(56) Entgegenhaltungen:
- DE-A- 3 118 018
- US-A- 4 309 771
- ERICSSON REVIEW, Band 58, Nr. 3, 1981, Seiten 128-133, Stockholm, SE; E.LUNDBLAD: "Contact RL400 - a new radio relay equipment"
- GLOBECOM '83, IEEE GLOBAL TELECOMMUNICATIONS CONFERENCE, San Diego, California,28. November - 1. Dezember 1983, Band 3, Seiten 41.5.1.-41-5.5., IEEE, New York, US; T. Nagatsu et al.: "Transmitter power control for cellular landmobile radio".
- CONFERENCE ON COMMUNICATIONS EQUIPMENT AND SYSTEMS, Birmingham, 20.-22. April1982, Seiten 109-115; R.F. ORMONDROYD: "Power control for spread-spectrumsystems"

## Beschreibung

Die Erfindung betrifft ein digitales Mobilfunksystem nach dem Oberbegriff des Anspruchs 1.

Ein System mit den im Oberbegriff des Anspruchs 1 genannten Merkmalen ist bekannt aus: ERICSSON REVIEW No. 3, 1981, Seiten 128-133, E. Lundblad, "CONTACT RL400-a New Radio Relay Equipment". Bei diesem System wird aus militärischen Gründen das zu übertragende Signal nicht nur verschlüsselt, sondern jeweils mit der für eine ungestörte Übertragung gerade eben genügenden Sendeleistung gesendet.

Auch in zivilen Funksystemen wird, wenn auch aus anderen Gründen, angestrebt, die Sendeleistung soweit wie möglich zu reduzieren. Beispielhaft wird hier ein Artikel aus Frequenz 36 (1982) 4/5, S. 90-99 genannt, der das Funkfernsprechnetz C der Deutschen Bundespost betrifft.

Aus der DE-OS 31 18 018 ist ein ziviles Mobilfunksystem bekannt, bei dem die Einstellung der Sendeleistung der Gegenstelle durch ein entsprechendes Signal in einer der Nachricht vorangestellten Präambel erfolgt (dortige Figur 5). Bei diesem Mobilfunksystem werden die zu übertragenden Signale durch ein Codewort verschlüsselt. Genaugenommen liegt dabei keine Verschlüsselung, sondern eine Modulation mit einem Codewort zum Zwecke der Bandspreizung oder der Codemultiplexbildung vor. Die Demodulation ("Entschlüsselung") erfolgt dabei in einem Korrelator durch Korrelation der empfangenen Signale mit dem notwendigerweise allgemein zugänglichen Codewort. Bei Auftreten mehrerer Korrelationsspitzen wird das Signal mit der maximalen Korrelationsspitze als das Nutzsignal ausgewählt.

Die Einstellung der für eine ungestörte Übertragung gerade eben genügenden Sendeleistung ist immer dann problematisch, wenn außer dem gewünschten Signal noch weitere Signale empfangen werden.

Hier schafft die Erfindung Abhilfe durch ein digitales Mobilfunksystem nach der Lehre des Anspruchs 1.

Die vorliegende Erfindung nutzt vor allem die Erkenntnis, daß das Größenverhältnis von der größten zur zweitgrößten Korrelationsspitze ein Maß für die Übertragungsqualität ist. Bei störungsarmer Übertragung ist die Korrelationsspitze sehr ausgeprägt. Das genannte Größenverhältnis wird dann, insbesondere bei Mittelung über mehrere nacheinander empfangene Signale, groß sein, während sich bei großen Störungen die Werte der größten und zweitgrößten Korrelationsspitze nur wenig voneinander unterscheiden.

Die Erfindung wird nachstehend anhand eines Beispiels erläutert. Dabei sollen nur zwei Funkstationen des Funksystems betrachtet werden. Jede der beiden Funkstationen stellt die Sendeleistung der jeweils anderen Funkstation ein. Das gilt auch dann, wenn eine Funkstation mit mehreren Funkstationen beispielsweise im Zeitmultiplexverfahren verkehrt. In diesem Fall kann sich die Sendeleistung dieser Funkstation von Kanal zu Kanal ändern. Die Sendeleistung ist zweckmäßigerweise in mehreren Stufen veränderbar, beispielsweise 0dB (maximale Leistung), 6dB, 16dB, 26dB (minimale Leistung).

In diesem Beispiel ist die zu übertragende Nachricht mit einem fehlererkennenden oder fehlerkorrigierenden Code codiert. In einem einfachen Fall kann das durch die Verwendung von Paritätsbits geschehen. Die Beurteilung der Übertragungsqualität erfolgt im Empfänger aufgrund der Häufigkeit der durch einen Decodierer erkannten oder korrigierten Fehler. Übersteigt die Anzahl der Fehler innerhalb einiger Sekunden einen oberen Grenzwert, veranlaßt der Empfänger eine Erhöhung der Sendeleistung. Dazu wird vom Sender der empfangenden Funkstation ein entsprechendes Signal zur sendenden Funkstation übermittelt. Wird dagegen ein unterer Grenzwert unterschritten, so erfolgt eine Verkleinerung der Sendeleistung. Andernfalls bleibt die Sendeleistung unverändert. Beide Grenzwerte sind so bemessen, daß eine Zeichenfehlerwahrscheinlichkeit von 10⁻⁴ eingehalten wird, sofern die Empfangsbedingungen dies zulassen.

Erfindungsgemäß wird nun wie bei der schon genannten DE-OS 31 180 18 das Funksystem so ausgestaltet, daß die zu übertragenden Signale durch ein Codewort verschlüsselt sind. Der Empfänger enthält einen Korrelator, der die empfangenen Signale mit diesem Codewort korreliert. Anhand der Größe der dabei auftretenden Korrelationsspitzen erkennt der Empfänger das richtige Signal. Die vorliegende Erfindung nutzt nun die Erkenntnis, daß das Größenverhältnis von der größten zur zweitgrößten Korrelationsspitze ein Maß für die Übertragungsqualität ist. Bei störungsarmer Übertragung wird das Größenverhältnis insbesondere bei Mittelung über mehrere nacheinander empfangene Signale groß sein, während sich bei großen Störungen beide Werte nur wenig voneinander unterscheiden. Die Sendeleistung soll dann geändert werden, wenn ein oberer oder unterer Grenzwert für das Größenverhältnis über- oder unterschritten ist. Die Einstellung der Sendeleistung erfolgt durch ein entsprechendes Signal in einer der Nachricht vorangestellten Präambel (Fig. 5 der DE-OS 31 180 18).

Zur Beurteilung der Übertragungsqualität werden nun beide der oben beschriebenen Möglichkeiten gleichzeitig genutzt. Die Erhöhung der Sendeleistung wird bereits veranlaßt, wenn nur eine Beurteilung eine schlechte Übertragungsqualität ausweist. Die Verringerung der Sendeleistung wird veranlaßt, wenn beide Beurteilungen übereinstimmend gut ausfallen.

Zusätzlich kann die Entscheidung zur Verringerung der Sendeleistung durch eine Messung der Empfangsfeldstärke oder des Phasenjitters beeinflußt werden. Sollte die Feldstärke unter einen bestimmten Minimalwert absinken, wird trotz guter Übertragungsqualität die Sendeleistung nicht weiter reduziert.

## Patentansprüche

1. Digitales Mobilfunksystem mit Mitteln in jeder an einer Funkverbindung in diesem System beteiligten Station, um in einem Zeitmultiplexkanal mit der jeweils anderen an derselben Funkverbindung beteiligten Station Signale auszutauschen, mit Mitteln, um die Signale in einem fehlererkennenden oder fehlerkorrigierenden Code zu übertragen, die Übertragungsqualität durch Messung der Bitfehlerhäufigkeit festzustellen, ein die Übertragungsqualität kennzeichnendes Steuersignal abzuleiten und dieses an die andere an der Funkverbindung beteiligte Station zu übertragen, mit Mitteln, um in einer Station die Sendeleistung aufgrund eines von der anderen an der Funkverbindung beteiligten Station empfangenen Steuersignals einzustellen und mit Mitteln, um die zu übertragenden Signale mit einem Codewort zu verschlüsseln, **dadurch gekennzeichnet**, daß eine Station eine Feststation ist, die Mittel aufweist, um im Zeitmultiplex mit mehreren Mobilstationen zu verkehren, daß Mittel vorhanden sind, um empfangsseitig die mit einem Codewort verschlüsselten Signale in einem Korrelator mit dem Codewort zu korrelieren und dabei das Verhältnis zwischen größter und zweitgrößter Korrelationsspitze zu ermitteln und daß die Mittel zur Ableitung des die Übertragungsqualität kennzeichnenden Steuersignals auch das ermittelte Verhältnis zwischen größter und zweitgrößter Korrelationsspitze mit heranziehen, derart, daß eine Erhöhung der Sendeleistung erfolgt, wenn entweder die Bitfehlerhäufigkeit oder das Verhältnis zwischen größter und zweitgrößter Korrelationsspitze auf eine nicht ausreichende Übertragungsqualität hinweist und daß eine Erniedrigung der Sendeleistung erfolgt, wenn beide Werte übereinstimmend auf eine ausreichende Übertragungsqualität hinweisen.

2. Mobilfunksystem nach Anspruch 1, dadurch gekennzeichnet, daß die Mittel zur Einstellung der Sendeleistung weiter von der Empfangsfeldstärke oder vom Phasenjitter beeinflußt werden.

## Claims

1. A digital mobile-radio system comprising means in each station involved in a radio communication in said system for exchanging signals, in a time-division multiplex channel, with the respective other station involved in the same radio communication, means for transmitting the signals in an error-detecting or error-correcting code, for determining the transmission quality by measuring the bit error rate, for deriving a control signal characteristic of the transmission quality, and for transmitting said control signal to the other station involved in the radio communication, means for adjusting the transmitting power in one of the two stations in response to a control signal received from the other station involved in the radio communication, and means for encoding the signals to be transmitted with a code word, **characterized in** that one station is a base station which comprises means for communicating with several mobile stations on a time-division multiplex basis, that means are provided at the receiving end for correlating the encoded signals with the code word in a correlator and at the same time determining the ratio between the largest and second-largest correlation peaks, and that the means for deriving the control signal characteristic of the transmission quality also take into account the determined ratio between the largest and second-largest correlation peaks, such that an increase in transmitting power will be initiated if either the bit error rate or the ratio between the largest and second-largest correlation peaks points to an insufficient transmission quality, and that a decrease in transmitting power will be initiated if both values point to a sufficient transmission quality.

2. A mobile-radio system as claimed in claim 1, characterized in that the means for adjusting the transmitting power are also influenced by the received field strength or by phase jitter.

## Revendications

1. Système de radio mobile numérique comportant, dans chaque station participant à une liaison radio dans ce système, des moyens pour échanger des signaux, dans un canal à multiplexage dans le temps, avec, chaque fois, l'autre station participant à la même liaison radio, comportant des moyens pour transmettre les signaux dans un code de reconnaissance des erreurs ou de correction des erreurs, pour déterminer la qualité de la transmission par mesure de la fréquence des erreurs de bits, pour dériver le signal de commande caractérisant la qualité de la transmission et le transmettre à l'autre station participapnt à la liaison radio, comportant des moyens pour ajuster dans une station la puissance d'émission sur la base d'un signal de commande reçu de la part de l'autre station participant à la liaison radio et comportant des moyens pour chiffrer avec un mot de code les signaux à transmettre, caractérisé par le fait qu'une station est une station fixe qui présente des moyens pour échanger du trafic avec plusieurs stations mobiles en multiplexage dans le temps, qu'il existe des moyens pour, du côté réception, corréler avec le mot de code, dans un corrélateur, les signaux chiffrés avec un mot de code et y établir le rapport entre le pic de corrélation le plus grand et le deuxième plus grand et que les moyens prévus pour dériver le signal de commande caractérisant la qualité de transmission utilisent également le rapport établi entre le pic de corrélation le plus grand et le deuxième plus grand de façon telle qu'il se produit une augmentation de la puissance d'émission lorsque soit la fréquence d'erreur de bits soit le rapport entre le pic le plus grand et le deuxième plus grand signalent une qualité de transmission insuffisante et qu'il se produit une diminution de la puissance d'émission lorsqu'en coincidant, les deux valeurs signalent une qualité de transmission suffisante.

2. Système de radio mobile selon la revendication 1, caractérisé par le fait que les moyens prévus pour ajuster la puissance d'émission sont en outre influencés par l'intensité de champ de la réception et par l'instabilité de phase.
